# EUROPÄISCHE PATENTANMELDUNG

(11) **EP 0 786 336 A2**
(43) Veröffentlichungstag der Anmeldung: **30.07.1997**
(21) Anmeldenummer: 96118103.9
(22) Anmeldetag: 12.11.1996
(51) Int. Cl.: B32B 33/00, B32B 15/08, B32B 25/08, C08J 5/12

(54) **Verfahren zur Herstellung eines Gummi-Metall-Teils**

(30) Priorität: 29.01.1996 DE 19603060
(71) Anmelder: Firma Carl Freudenberg, D-69469 Weinheim (DE)
(72) Erfinder: Schwerdt, Hans-Werner, 69514 Laudenbach (DE)

(57) **Zusammenfassung**

Verfahren zur Herstellung eines Gummi-Metall-Teils, bei dem als Korrosionsschutz auf das Metallteil ein Schutzlack aufgebracht wird und anschließend das Gummiteil unter Verwendung eines Haftmittels mit dem Metallteil verbunden wird. Das Metallteil wird in einem ersten Verfahrensschritt mit einer metallhaltigen Korrosionsschutzschicht beschichtet. In einem zweiten Verfahrensschritt wird auf die Korrosionsschutzschicht ein Lack aufgebracht und unter Zufuhr von Wärme nur teilweise ausreagiert. In einem dritten Verfahrensschritt wird auf das Metallteil und/oder das Gummiteil ein Haftmittel aufgebracht. In einem vierten Verfahrensschritt werden das Gummi- und das Metallteil zusammengefügt und der Lack und das Haftmittel durch Druck und Wärmezufuhr miteinander vernetzt und vollständig ausreagiert.

## Beschreibung

Die Erfindung betrifft ein Verfahren zur Herstellung eines Gummi-Metall-Teils, bei dem als Korrosionsschutz auf das Metallteil ein Schutzlack aufgebracht wird und anschließend das Gummiteil unter Verwendung eines Haftmittels mit dem Metallteil verbunden wird.

Ein solches Verfahren ist aus der EP 0 054 861 B1 bekannt. Auf das Metallteil wird bei Temperaturen zwischen 250°C und 280°C eine Lackschicht von 15 bis 25 µm Schichtstärke eingebrannt, wobei anschließend ein Haftvermittlersystem aus halogenisierten Polymeren aufgetragen und danach eine Kautschukschicht aufgespritzt wird, die anschließend vulkanisiert wird. Dieses Verfahren führt zu keinem zufriedenstellenden Korrosionsschutz, da die Lackschicht eine nur sehr geringe Schichtstärke aufweist. Außerdem ist die Verbindung zwischen der Lackschicht und dem Haftvermittler nicht ausreichend, da durch das Einbrennen des Lacks bei sehr hohen Temperaturen keine reaktiven Molekülgruppen mehr in der Lackschicht vorhanden sind, d.h. der Lack nach dem Aufbringen bereits vollständig ausreagiert ist.

Der Erfindung liegt die Aufgabe zugrunde, ein Verfahren der vorbekannten Art derart weiterzuentwickeln, daß neben einem verbesserten Korrosionsschutz des Metallteils eine wesentlich bessere Haftung zwischen der Korrosionsschutzschicht und dem Gummiteil erzielt wird.

Diese Aufgabe wird erfindungsgemäß durch die Merkmale von Anspruch 1 gelöst. Auf vorteilhafte Weiterbildungen des Verfahrens nehmen die Unteransprüche Bezug.

Zur Lösung der Aufgabe ist es vorgesehen, daß das Metallteil in einem ersten Verfahrensschritt mit einer metallhaltigen Korrosionsschutzschicht beschichtet wird, daß in einem zweiten Verfahrensschritt auf die Korrosionsschutzschicht ein Lack aufgebracht wird, der unter Zufuhr von Wärme nur teilweise ausreagiert wird, daß in einem dritten Verfahrensschritt auf das Metallteil und/oder das Gummiteil ein Haftmittel aufgebracht wird und daß in einem vierten Verfahrensschritt das Gummi- und das Metallteil zusammengefügt und der Lack und das Haftmittel durch Druck und Wärmezufuhr miteinander vernetzt und vollständig ausreagiert werden. Hierbei ist von Vorteil, daß der Lack bei einer vergleichsweise niedrigen Temperatur zunächst nur teilweise vernetzt/ausreagiert wird, so daß noch eine ausreichend große Anzahl reaktiver Molekülgruppen vorhanden ist, zur Reaktion mit dem Haftmittel, das im dritten Verfahrensschritt aufgebracht und im vierten Verfahrensschritt zusammen mit dem Lack vollständig vernetzt wird. Durch die Reaktion der Molekülgruppen mit dem Haftmittel wird eine besonders haltbare Verbindung zwischen dem Gummi- und dem Metallteil hergestellt. Das erfindungsgemäße Verfahren ist vergleichsweise einfach und kostengünstig durchführbar da erst im letzten Verfahrensschritt der Lack und das Haftmittel miteinander vernetzt werden und die dazu erforderliche Wärmemenge nur vergleichsweise gering ist. Die Temperatur im vierten Verfahrensschritt beträgt ca. 150 bis 180°C.

Das Metallteil und/oder das Gummiteil bestehen jeweils aus zumindest einem Bestandteil, wobei insbesondere das Gummiteil aus mehreren Federkörpern bestehen kann. Das Gummiteil wird vor dem dritten Verfahrensschritt vorgeformt und vulkanisiert, wobei im dritten Verfahrensschritt als Haftmittel bevorzugt ein handelsübliches, reaktives, wärmevernetzbares Haftmittel zur Anwendung gelangen kann.

Im ersten Verfahrensschritt kann als Korrosionsschutzschicht eine Zinkphosphatschicht oder eine Eisenphosphatschicht und/oder eine Zinkschicht aufgetragen werden.

Im ersten Verfahrensschritt wird als Korrosionsschutzschicht eine Eisenphosphatschicht bzw. eine Zinkphosphatschicht aufgetragen, wobei man für Teile mit feineren oder maßgenaueren Oberflächen eine Eisenphosphatschicht vorziehen wird. Diese weist eine geringere Schichtdicke auf und ist das wirtschaftlichste und recyclingfreundlichste Verfahren. Bei rauheren Oberflächen bzw. unterschiedlich stark voroxydierten Oberflächen oder einem nicht homogenen Anlieferungszustand zieht man eine Zinkphosphatbeschichtung mit einem in das Verfahren eingeschlossenen Ätz- bzw. Reinigungsvorgang vor, wobei man die Stärke der Zinkphosphatschicht noch in einem größeren Bereich variieren kann, je nach erforderlichem Korrosionsschutz.

Wird ein noch höherer Korrosionsschutz gefordert, dann ist es zweckmäßig, zunächst galvanisch z.B. eine Zinkschicht auf das Metallteil aufzubringen und dann auf die Zinkschicht die Metallphosphatschicht aufzutragen, was zusammen mit der Lackschicht den besten Korrosionsschutz bietet.

Im zweiten Verfahrensschritt kann als Lack ein Pulverlack in Niedertemperaturausführung aufgetragen werden, bestehend aus einem Polyester-Expoxidharzgemisch. Hierbei ist von Vorteil, daß die Lackschicht bei einer relativ niedrigen Temperatur bereits teilweise vernetzt werden kann, so daß eine große Anzahl reaktiver Molekülgruppen zur Reaktion mit dem Haftmittel im vierten Verfahrensschritt zur Verfügung steht. Auch zur vollständigen Vernetzung im vierten Verfahrensschritt sind nur vergleichsweise niedrige Temperaturen erforderlich, so daß eine Beschädigung/Zerstörung des Gummiteils während des Verfahrens ausgeschlossen werden kann. Die Temperaturbereiche, in denen ein Niedertemperaturlack ausreagiert werden kann, liegen zwischen 150 und 180°C.

Als Lackschicht können auch übliche altbekannte lösungsmittelhaltige Lacke bzw. wasserlösliche Lacke verarbeitet werden, bei denen jedoch ein energieinduzierter Abluft- bzw. Trocknungsprozeß notwendig ist. Es besteht auch die Möglichkeit, einen KTL-Lack durch kataphoretische Tauchlackierung (KTL) aufzubringen. Dieser bietet durch die kathodische Lackabscheidung auf dem als Kathode fungierenden Metallteil ein besonders dichtes und homogenes Gefüge bei vergleichsweise geringen Schichtstärken von ca. 25 µm bis 45 µm, gegenüber 60 µm bis 80 µm bei Pulverlack.

Unabhängig davon, welcher der oben genannten Lacke im zweiten Verfahrensschritt aufgetragen wird, beträgt die Schichtstärke 25 bis 80, bevorzugt 35 bis 75 µm. Durch eine derartige, vergleichsweise große Schichtdicke wird den gestiegenen Anforderungen an den Korrosionsschutz der Metallteile Rechnung getragen.

Durch das zuvor beschriebene Verfahren sind Gummi-Metall-Teile im allgemeinen, und Torsionsschwingungsdämpfer im besonderen herstellbar. Handelt es sich bei dem Gummi-Metall-Teil um einen Torsionsschwingungsdämpfer, ist das Metallteil durch ein Nabenteil und einen das Nabenteil mit radialem Abstand umschließenden Schwungring gebildet, wobei das Gummiteil durch zumindest einen Federkörper gebildet ist, der in dem durch den Abstand gebildeten Spalt zwischen dem Nabenteil und dem Schwungring angeordnet und mit Übermaß eingepreßt ist.

## Patentansprüche

1. Verfahren zur Herstellung eines Gummi-Metall-Teils, bei dem als Korrosionsschutz auf das Metallteil ein Schutzlack aufgebracht wird und anschließend das Gummiteil unter Verwendung eines Haftmittels mit dem Metallteil verbunden wird, dadurch gekennzeichnet, daß das Metallteil in einem ersten Verfahrensschritt mit einer metallhaltigen Korrosionsschutzschicht beschichtet wird, daß in einem zweiten Verfahrensschritt auf die Korrosionsschutzschicht ein Lack aufgebracht wird der unter Zufuhr von Wärme nur teilweise ausreagiert wird, daß in einem dritten Verfahrensschritt auf das Metallteil und/oder das Gummiteil ein Haftmittel aufgebracht wird und daß in einem vierten Verfahrensschritt das Gummi- und das Metallteil zusammengefügt und der Lack und das Haftmittel durch Druck und Wärmezufuhr miteinander vernetzt und vollständig ausreagiert werden.

2. Verfahren nach Anspruch 1, dadurch gekennzeichnet, daß im ersten Verfahrensschritt als Korrosionsschutzschicht eine Zinkphosphatschicht aufgetragen wird.

3. Verfahren nach Anspruch 1, dadurch gekennzeichnet, daß im ersten Verfahrensschritt als Korrosionsschutzschicht eine Eisenphosphatschicht aufgetragen wird.

4. Verfahren nach Anspruch 1, dadurch gekennzeichnet, daß im ersten Verfahrensschritt als Korrosionsschutzschicht eine Zinkschicht aufgetragen wird.

5. Verfahren nach einem der Ansprüche 1 bis 4, dadurch gekennzeichnet, daß im zweiten Verfahrensschritt als Lack ein Pulverlack in Niedertemperaturausführung, bestehend aus Polyester-Epoxidharzgemisch aufgetragen wird.

6. Verfahren nach einem der Ansprüche 1 bis 4, dadurch gekennzeichnet, daß im zweiten Verfahrensschritt als Lack ein KTL-Lack aufgetragen wird.

7. Verfahren nach einem der Ansprüche 5 bis 6, dadurch gekennzeichnet, daß der Lack in einer Schichtstärke von 25 bis 80 µm aufgetragen wird.

8. Verfahren nach einem der Ansprüche 1 bis 7, dadurch gekennzeichnet, daß der Lack im zweiten Verfahrensschritt auf 140 bis 150°C erwärmt und dadurch vorvernetzt wird.

9. Gummi-Metall-Teil, hergestellt nach einem Verfahren gemäß einem der Ansprüche 1 bis 8, dadurch gekennzeichnet, daß das Metallteil zweiteilig ausgebildet und durch ein Nabenteil und einen das Nabenteil mit radialem Abstand umschließenden Schwungring gebildet ist, daß das Gummiteil durch zumindest einen Federkörper gebildet ist, der in dem durch den Abstand gebildeten Spalt zwischen dem Nabenteil und dem Schwungring angeordnet ist und daß das Gummi-Metall-Teil als Torsionsschwingungsdämpfer ausgebildet ist.
